(19) Europäisches Patentamt
European Patent Office
Office européen des brevets

(11) **EP 3 518 180 B1**

(12) **EUROPÄISCHE PATENTSCHRIFT**

(45) Veröffentlichungstag und Bekanntmachung des Hinweises auf die Patenterteilung:
**16.09.2020   Patentblatt 2020/38**

(51) Int Cl.:
***G06T 5/50*** (2006.01)

(21) Anmeldenummer: **18211361.3**

(22) Anmeldetag: **10.12.2018**

(54) **VERFAHREN ZUR ERSTELLUNG EINER BILDSTAPEL-DATENSTRUKTUR**

METHOD FOR PRODUCING AN IMAGE STACK DATA STRUCTURE

PROCÉDÉ DE CRÉATION D'UNE STRUCTURE DE DONNÉES DE PILES D'IMAGES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.01.2018   AT 500652018**

(43) Veröffentlichungstag der Anmeldung:
**31.07.2019   Patentblatt 2019/31**

(73) Patentinhaber: **AIT Austrian Institute of Technology GmbH
1210 Wien (AT)**

(72) Erfinder:
 • **BROSCH, Nicole
   1180 Wien (AT)**
 • **STOLC, Svorad
   831 01 Bratislava (SK)**

(74) Vertreter: **Wildhack & Jellinek
Patentanwälte
Landstraßer Hauptstraße 50
1030 Wien (AT)**

(56) Entgegenhaltungen:
**EP-A1- 2 902 963**

 • **ROBERT C. BOLLES ET AL: "Epipolar-plane image analysis: An approach to determining structure from motion", INTERNATIONAL JOURNAL OF COMPUTER VISION., Bd. 1, Nr. 1, 1. Januar 1987 (1987-01-01), Seiten 7-55, XP055559157, US ISSN: 0920-5691, DOI: 10.1007/BF00128525**
 • **JIANG YU ZHENG ET AL: "ACQUIRING A COMPLETE 3D MODEL FROM SPECULAR MOTION UNDER THE ILLUMINATION OF CIRCULAR-SHAPED LIGHT SOURCES", IEEE TRANSACTIONS ON PATTERN ANALYSIS AND MACHINE INTELLIGENCE, IEEE COMPUTER SOCIETY, USA, Bd. 22, Nr. 8, 1. August 2000 (2000-08-01) , Seiten 913-920, XP000976493, ISSN: 0162-8828, DOI: 10.1109/34.868691**

**Beschreibung**

Die Erfindung betrifft ein Verfahren zur Erstellung einer Bildstapel-Datenstruktur gemäß Patentanspruch 1.

EP 2902963 A1 offenbart ein Verfahren zur Erstellung eines Abbilds eines Gegenstands, der an einem Flächensensor vorbeitransportiert wird, bei dem anhand der Position der einzelnen Bildbereiche des Gegenstands als Bildpunkte bzw. Einträge in den einzelnen Abbildern einer Abbild-Datenstruktur die Form des Gegenstands abgeleitet und anhand einer Summen- oder Mittelwertbildung ein Farb- oder Helligkeitswert für den entsprechenden Bildpunkt ermittelt wird.

Bildaufnahmeeinheiten, die über eine Anzahl von Sensorzeilen verfügen, werden häufig für hochgeschwindigkeits- bzw. hochauflösende Aufnahmen von Objekten, die an der Bildaufnahmeeinheit vorbei transportiert werden, beispielsweise in der industriellen Qualitätsprüfung, verwendet.

Um Synchronisierungsproblemen bei der Aufnahme von Objekten vorzubeugen, werden bei aus dem Stand der Technik bekannten Bildaufnahmesystemen hochpräzise Linearantriebe bzw. Bewegungssensoren verwendet. Dabei können jedoch besonders bei starken Vergrößerungen Transport-Artefakte bei der Aufnahme von sich bewegenden Objekten verbleiben, die dadurch bedingt sind, dass die Bewegung, mit der die Objekte an der Bildaufnahmeeinheit vorbei transportiert werden, nicht perfekt mit der Bildaufnahmeeinheit synchronisiert ist, insbesondere wenn die Transportgeschwindigkeit nicht konstant ist. Derartige Transport-Artefakte sind besonders bei hohen Vergrößerungen problematisch und die aufgenommenen Bilddaten weisen in diesem Fall zeitliche und/oder räumliche Verzerrungen auf, die beispielsweise die visuelle Qualitätskontrolle behindern können.

Aufgabe der Erfindung ist es daher ein Verfahren zur Erstellung einer Bildstapel-Datenstruktur bereitzustellen, das eine Kompensation derartiger Synchronisierungsprobleme bzw. Transport-Artefakte auf zuverlässige und einfache Weise gewährleistet.

Die Erfindung löst diese Aufgabe mit einem Verfahren zur Erstellung einer Bildstapel-Datenstruktur, wobei

- ein Gegenstand entlang einer Transportrichtung durch den Aufnahmebereich einer Bildaufnahmeeinheit bewegt wird,
- von der Bildaufnahmeeinheit Aufnahmen erstellt werden,

  - wobei die Bildaufnahmeeinheit über eine Anzahl von Sensorzeilen verfügt, die normal zur Transportrichtung des Gegenstands und in Bezug zur Transportrichtung hintereinander, insbesondere parallel zueinander ausgerichtet, angeordnet sind, insbesondere Zeilen eines Flächensensors bilden,
  - wobei die einzelnen Aufnahmen jeweils Zeilenaufnahmen umfassen, die jeweils mittels einer Sensorzeile zu vorgegebenen Aufnahmezeitpunkten erstellt werden,
  - wobei die vorgegebenen Aufnahmezeitpunkte für alle Aufnahmen gleich sind und dem Transportfortschritt entlang der Transportrichtung entsprechen,

- eine dreidimensionale Bildstapel-Datenstruktur aus den Aufnahmen des Gegenstands erstellt wird, wobei die einzelnen Einträge der Bildstapel-Datenstruktur für eine Anzahl von Aufnahmeindizes jeweils zumindest einen Helligkeitswert für die einzelnen Pixel der Sensorzeilen enthalten, wobei die Indizes der dreidimensionalen Bildstapel-Datenstruktur festgelegt sind durch

  i) einen den Transportfortschritt kennzeichnenden ganzzahligen Aufnahmeindex zu dem der betreffende Helligkeitswert erstellt wurde,
  ii) einen die Position der Sensorzeile in Transportrichtung in der sich das Pixel befindet, das den betreffenden Helligkeitswert ermittelt hat, kennzeichnenden Zeilenindex, und
  iii) die Spaltenposition desjenigen Pixels, das den betreffenden Helligkeitswert ermittelt hat, in Bezug auf die Sensorzeilen normal zur Transportrichtung mit den kennzeichnenden Merkmalen von Anspruch 1.

Erfindungsgemäß ist dabei vorgesehen, dass

- für einzelne ausgewählte Einträge, insbesondere für alle Einträge, der Bildstapel-Datenstruktur

  - ausgehend vom jeweils ausgewählten Eintrag, der einer Sensorzeile zugeordnet ist, nach zumindest zwei Einträgen, deren Helligkeitswerte von anderen Sensorzeilen erstellt wurden und die derselben Spaltenposition zugeordnet sind, gesucht wird, die denselben Gegenstandsbereich zeigen, wie der jeweilige ausgewählte Eintrag, und deren Zeilenindizes vom Zeilenindex des ausgewählten Eintrags verschieden sind, wobei insbesondere die Differenz von deren Zeilenindizes zum Zeilenindex des ausgewählten Eintrags einen von mehreren vorgegebenen Werten aufweist,

- die Abstände hinsichtlich des Aufnahmeindex jeweils zwischen dem ausgewählten Eintrag und jeweils einem der so aufgefundenen Einträge unter Verwendung von Subpixel-Arithmetik berechnet werden,

- ein Abstandsmittelwert der Abstände für einzelne Aufnahmeindizes und Zeilenindizes über ausgewählte, insbesondere alle, Spaltenpositionen, insbesondere jeweils für beide Abstände separat, gebildet wird,
- für eine Anzahl von Paaren umfassend jeweils einen der Aufnahmeindizes und einen der Zeilenindizes jeweils ein Element erstellt wird, dem die jeweiligen Abstandsmittelwerte zugeordnet werden, und
- einer Anzahl von ausgewählten Elementen jeweils weitere Elemente mit relativ zum jeweiligen ausgewählten Element vorgegebenen Zeilenindex zugewiesen werden, bei denen der Unterschied der unbereinigten Aufnahmeindizes des ausgewählten Elements und des weiteren Elements dem, dem ausgewählten Element zugeordneten, jeweiligen Abstandsmittelwert entspricht, oder diesem am nächsten kommt,
wobei gegebenenfalls die beiden mit demselben Zeilenindex versehenen weiteren Elemente mit den beiden dem jeweiligen Abstandsmittelwert am nächsten kommenden Unterschieden der unbereinigten Aufnahmeindizes dem jeweiligen ausgewählten Element gemeinsam zugewiesen werden,
und
- eine Indexbereinigung des ursprünglichen Aufnahmeindex durchgeführt und für jeden Aufnahmeindex ein subpixelgenauer bereinigter Aufnahmeindex als Ersatzwert für den ursprünglichen Aufnahmeindex mittels eines Optimierungsverfahrens derart bestimmt wird, dass folgende Nebenbedingungen erfüllt sind:

- die einzelnen Differenzen zwischen dem bereinigten Aufnahmeindex eines ausgewählten Elements und dem bereinigten Aufnahmeindex eines ihm jeweils zugeordneten Elements sind untereinander gleich,
- wobei im Fall, dass die Zeilenindexunterschiede des ausgewählten Eintrags oder Elements und des ihm jeweils zugeordneten Eintrags oder Elements sich voneinander unterscheiden, die Abstandsmittelwerte mit einem zum Zeilenindexunterschied der für seine Bestimmung herangezogenen Einträge oder Elemente invers proportionalen Kompensationsfaktor gewichtet werden, und
wobei insbesondere der bereinigte Aufnahmeindex mehrerer gemeinsam zugeordneter Elemente durch Gewichtung der bereinigten Aufnahmeindizes der gemeinsam zugeordneten Elementen ermittelt wird,

- der bereinigte Aufnahmeindex eines Elements liegt möglichst nahe beim jeweiligen unbereinigten Aufnahmeindex des betreffenden Elements.

Um zu gewährleisten, dass Elemente der Bildstapel-Datenstruktur, die demselben Gegenstandsbereich zugeordnet sind, entlang von glatt verlaufenden Epipolarlinien in der Bildstapel-Datenstruktur verfolgbar sind, kann bei einem erfindungsgemäßen Verfahren vorgesehen sein, dass dem Optimierungsverfahren als zusätzliche Nebenbedingung vorgegeben wird, dass bereinigte Aufnahmeindizes in Transportrichtung möglichst gleichverteilt liegen, sodass sie zu ihren benachbarten bereinigten Aufnahmeindizes in Transportrichtung jeweils möglichst denselben Abstand oder einen vorgegebenen Abstand aufweisen.

Um eine möglichst exakte Wiedergabe der einen Gegenstandspunkt charakterisierenden Helligkeitswerte in der entzerrten Bildstapel-Datenstruktur zu gewährleisten, kann vorgesehen sein, dass für alle Sensorzeilen und Spaltenpositionen separat eine Interpolation unter der Vorgabe durchgeführt wird, dass die Interpolierende für die Elemente ermittelte Helligkeitswerte bei Vorgabe des jeweiligen bereinigten Aufnahmeindex liefert, und wobei die Interpolierende an den durch den ursprünglichen Aufnahmeindizes festgelegten Positionen ausgewertet wird und derart eine entzerrte Bildstapel-Datenstruktur erstellt wird.

Um sicherzustellen, dass bei einem erfindungsgemäßen Verfahren die tatsächliche Beabstandung der Sensorzeilen der Bildaufnahmeeinheit in der Bildstapel-Datenstruktur berücksichtigt ist, kann vorgesehen sein, dass die Beabstandung des Zeilenindex der Beabstandung der jeweiligen Sensorzeilen oder der Beabstandung der Aufnahmebereiche der Sensorzeilen entspricht.

Weitere Vorteile und Ausgestaltungen der Erfindung ergeben sich aus der Beschreibung und den beiliegenden Zeichnungen.

Besonders vorteilhafte, aber nicht einschränkend zu verstehende Ausführungsbeispiele der Erfindung werden im Folgenden anhand der beiliegenden Zeichnungen schematisch dargestellt und unter Bezugnahme auf die Zeichnungen beispielhaft beschrieben.

Im Folgenden zeigen:

Fig. 1 schematisch den Aufbau einer Anordnung zur Durchführung eines erfindungsgemäßen Verfahrens,
Fig. 2 ein schematisches Beispiel eines Bildstapels von mit der in Fig. 1 dargestellten Anordnung zeitlich aufeinanderfolgend erstellten Aufnahmen eines Gegenstands,
**Fig.** 3a zeigt ein Beispiel für eine Bildstapel-Datenstruktur und ein schematisches Beispiel für die Ermittlung der Abstände zwischen korrespondierenden Elementen in der Bildstapel-Datenstruktur

Fig. 3b zeigt ein schematisches Beispiel für die Zuordnung von Elementen entsprechend den Abstandsmittelwerten, welche im Zuge der Optimierung verwendet wird.,

Fig. 4 eine schematische grafische Darstellung einer Interpolierenden zur Ermittlung von interpolierten Helligkeitswerten.

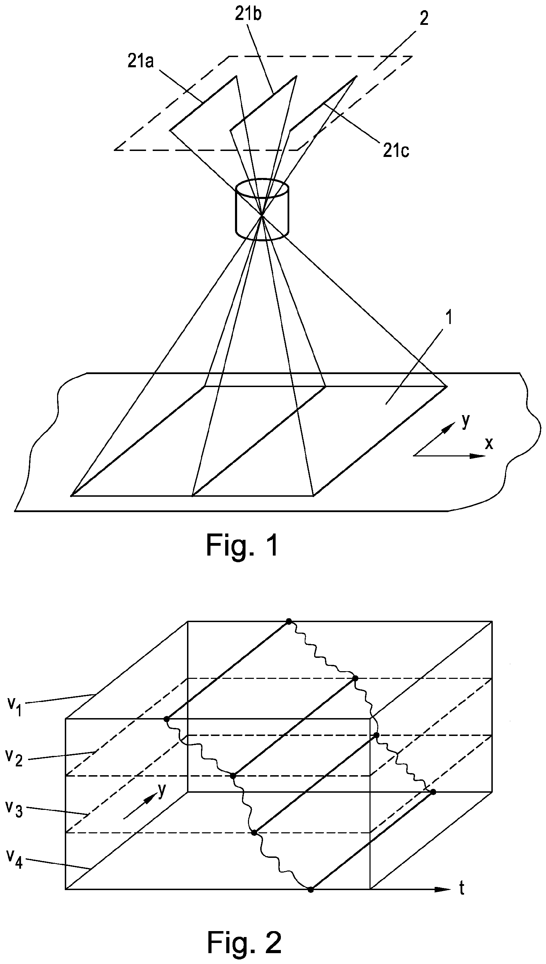

Der in **Fig. 1** dargestellte Aufbau zur Durchführung eines erfindungsgemäßen Verfahrens umfasst eine Bildaufnahmeeinheit 2, die über eine Anzahl von Sensorzeilen 21a, 21b, 21c verfügt. Die Sensorzeilen 21a, 21b, 21c der Bildaufnahmeeinheit 2 können auch durch einzelne ausgewählte Zeilen eines Flächensensors realisiert sein. Die Position jedes der Sensorpixel der Sensorzeilen in Zeilenrichtung y ist durch einen Spaltenindex bzw eine y-Koordinate beschrieben. Die Sensorpixel, die derselben Sensorzeile zugehören, weisen - bezogen auf den Flächensensor - denselben Zeilenindex z auf, der konkret die Lage des betreffenden Sensorpixels bzw der Sensorzeile in Transportrichtung x angibt.

Im gezeigten vereinfachten Ausführungsbeispiel umfasst die Bildaufnahmeeinheit 2 drei Sensorzeilen 21a, 21b, 21c. Die Sensorzeilen 21a, 21b, 21c sind dabei zur Aufnahme eines Gegenstands 1 auf einen Bereich gerichtet, durch den der Gegenstand 1 bewegt werden soll. Üblicherweise werden zwischen 10 und 20 Sensorzeilen herangezogen.

Zur Aufnahme eines Gegenstands 1 wird dieser entlang einer Transportrichtung x durch den Aufnahmebereich der Bildaufnahmeeinheit 2 bewegt. Dabei werden zu vorgegebenen Aufnahmezeitpunkten von der Bildaufnahmeeinheit 2 Aufnahmen erstellt, wobei jeder Aufnahme entsprechend ihrem Aufnahmezeitpunkt ein Aufnahmeindex $t_1$, ..., $t_9$ zugewiesen wird, aus dem die zeitliche Abfolge der einzelnen Aufnahmen entnehmbar ist. Aus dem Aufnahmeindex lässt sich ebenso der Transportfortschritt feststellen. Die Sensorzeilen 21a, 21b, 21c der Bildaufnahmeeinheit 2 sind normal zur Transportrichtung x des Gegenstands 1 und im Bezug zur Transportrichtung x hintereinander, insbesondere parallel zueinander ausgerichtet, angeordnet. Die Sensorzeilen 21a, 21b, 21c nehmen dabei einzelne Bereiche des Gegenstands gleichzeitig zu denselben vorgegebenen Aufnahmezeitpunkten auf. Optional kann der Gegenstand 1, während er durch den Aufnahmebereich der Bildaufnahmeeinheit 2 transportiert wird, auch beleuchtet werden.

Bei derartigen aus dem Stand der Technik bekannten Anordnungen wird ein aufzunehmender Gegenstand 1 meist mittels eines Linearantriebs an der Bildaufnahmeeinheit 2 vorbeibewegt und dabei werden zu vorgegebenen Aufnahmezeitpunkten Aufnahmen des Gegenstands 1 erstellt. Dabei wird der Gegenstand 1 von jeder der Sensorzeilen 21a, 21b, 21c der Bildaufnahmeeinheit 2 unter einem anderem Winkel aufgenommen.

Dadurch wird jeder Gegenstandspunkt im Zuge seiner Bewegung durch den Aufnahmebereich der Bildaufnahmeeinheit 2 auf dem Gegenstand 1 jeweils von jeder der Sensorzeilen 21a, 21b, 21c unter verschiedenen Betrachtungsrichtungen bzw. -winkeln aufgenommen. Dabei wird von jedem der Zeilensensoren jeweils eine Aufnahme $v_1$, ..., $v_4$ erstellt, die jeweils alle mittels der jeweiligen Sensorzeile 21a, 21b, 21c erstellten Zeilenbilder des Gegenstands 1, enthält. Die einzelnen Zeilenbilder sind dabei entsprechend ihrem Aufnahmezeitpunkt hintereinander in der jeweiligen Aufnahme angeordnet, sodass die Aufnahme ein Bild des Gegenstands aus einem bestimmten, durch die Position der Sensorzeile festgelegten Blickwinkel zeigt.

Ein jeweils betrachteter Gegenstandspunkt ist in von verschiedenen Sensorzeilen 21a, 21b, 21c erstellten Aufnahmen $v_1$, ..., $v_4$ des Gegenstands 1 daher an unterschiedlichen Bildpunktpositionen in der jeweils betrachteten Aufnahme $v_1$, ..., $v_4$ abgebildet.

**Fig. 2** zeigt schematisch einen aus derartigen Aufnahmen $v_1$, ..., $v_4$ erstellten Bildstapel des in **Fig. 1** dargestellten ebenen Gegenstands 1, wobei die Aufnahmen $v_1$, ..., $v_4$ von vier verschiedenen Sensorzeilen 21a, 21b, 21c erstellt wurden. In **Fig. 2** ist ersichtlich, dass beim zeitlich aufeinanderfolgenden Erstellen von Aufnahmen $v_1$, ..., $v_4$ des Gegenstands 1, während dieser an der Bildaufnahmeeinheit 2 vorbeibewegt wird, keine ideale Synchronisierung zwischen dem Transportmechanismus und der Bildaufnahmeeinheit 2 vorherrscht.

Dies ist dadurch verursacht, dass beispielsweise die Blende der Bildaufnahmeeinheit 2 bei der Erstellung einer jeden Aufnahme $v_1$, ..., $v_4$ gleich lange geöffnet ist, der Transport des Gegenstands 1 an der Bildaufnahmeeinheit 2 jedoch nicht mit einer kontinuierlichen gleichmäßigen Bewegung erfolgt. Dieser Umstand führt dazu, dass Bildpunkte, die denselben Gegenstandspunkt des Gegenstands 1 in verschiedenen Sensorzeilen zugeordneten Aufnahmen $v_1$, ..., $v_4$ abbilden, im Bildstapel nicht entlang einer gerade Linie, auch als Epipolarlinie bezeichnet, liegen.

Wird beispielsweise der in **Fig. 2** dargestellte Bildstapel für eine dreidimensionale Rekonstruktion des aufgenommenen Gegenstands 1 verwendet, führen derartige synchronisierungsbedingte Transport-Artefakte zu Fehlern bei der Ermittlung des Abstands der Oberfläche des Gegenstands von der Bildaufnahmeeinheit 2 und behindern somit eine genaue dreidimensionale Rekonstruktion des Gegenstands 1, besonders wenn der Gegenstand 1 unter hoher Vergrößerung aufgenommen wurde.

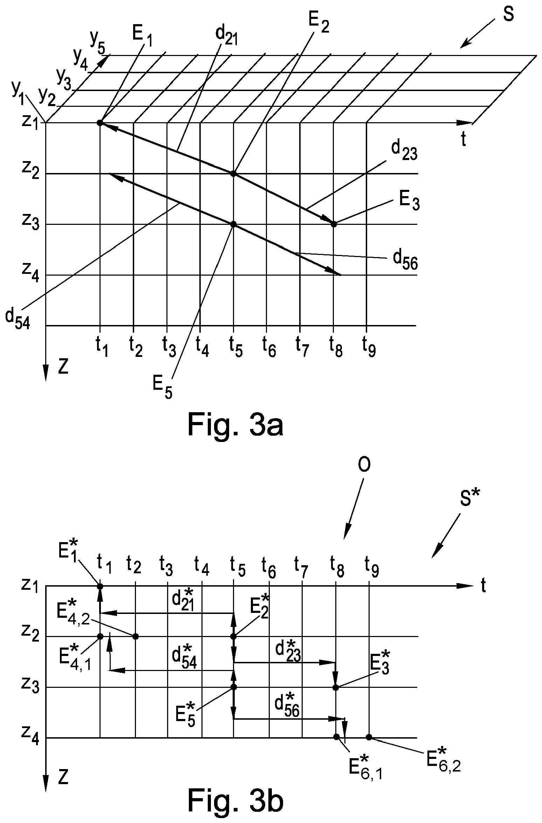

Als Ausgangspunkt der im Folgenden gezeigten Korrektur eines Bildstapels wird eine dreidimensionale Bildstapel-Datenstruktur S herangezogen, die aus den Aufnahmen des Gegenstands 1 erstellt wird. Eine derartige Bildstapel-Datenstruktur S ist in **Fig. 3a** schematisch dargestellt. Die Bildstapel-Datenstruktur S umfasst dabei einzelne Einträge $E_1$, $E_2$, $E_3$, die für einzelne Aufnahmeindizes $t_1$, ..., $t_9$ jeweils zumindest einen Helligkeitswert für die einzelnen Pixel der Sensorzeilen 21a, 21b, 21c enthalten. Bei der Bildstapel-Datenstruktur S handelt es sich um eine dreidimensionale Datenstruktur, deren Indizes festgelegt sind durch:

- einen den Transportfortschritt kennzeichnenden ganzzahligen Aufnahmeindex $t_1$, ..., $t_9$, zu dem der betreffende Helligkeitswert erstellt wurde,
- einen die Sensorzeile insbesondere deren Position in Transportrichtung x, in der sich das jeweilige Pixel befindet, das den betreffenden Helligkeitswert ermittelt hat, kennzeichnenden Zeilenindex $z_1$, ..., $z_4$ und
- die Spaltenposition $y_1$,... $y_5$ desjenigen Pixels, das den betreffenden Helligkeitswert ermittelt hat, in Bezug auf die Sensorzeilen 21a, 21b, 21c normal zur Transportrichtung.

In der in Fig. 3a dargestellten Bildstapel-Datenstruktur S kann die Bewegung des Gegenstands 1 verfolgt werden, indem Abbilder einzelner seiner Oberflächenbereiche an unterschiedlichen Positionen mit unterschiedlichem Zeilenindex $z_1$, ..., $z_4$ und unterschiedlichem Aufnahmeindex $t_1$, ..., $t_9$ innerhalb des Bildstapels aufgefunden werden. Bei der Suche nach den Abbildern kann die jeweilige Spaltenpositionen $y_1$,... $y_5$ jeweils gleich gelassen werden, da üblicherweise nur unwesentliche Positionsänderungen in Spaltenrichtung detektierbar sind.

Eine Bildstapel-Datenstruktur S wie sie in **Fig. 3a** dargestellt ist, beinhaltet n x r x m Einträge $E_1$, $E_2$, $E_3$, wobei m die in der Bildstapel-Datenstruktur S vergebene Anzahl an Zeilenindizes $z_1$, ..., $z_4$ angibt, r die Anzahl an vergebenen Spaltenpositionen $y_1$,... $y_5$ und n die Anzahl an vergebenen Aufnahmeindizes $t_1$, ..., $t_9$.

Dies ist dadurch bedingt, dass die Sensorzeilen 21a, 21b, 21c sich, wie in **Fig. 1** dargestellt, normal zur Transportrichtung x, d.h. in y-Richtung, erstrecken und jede Gegenstandszeile des Gegenstands 1 während des Transports des Gegenstands 1 aufeinanderfolgend von den Sensorzeilen 21a, 21b, 21c aufgenommen wird.

Als nächster Verfahrensschritt wird für einzelne ausgewählte Einträge insbesondere für alle Einträge der Bildstapel-Datenstruktur S, ausgehend von einem jeweils ausgewählten Eintrag nach zumindest zwei unterschiedlichen Einträgen gesucht, deren Helligkeitswerte von anderen Sensorzeilen 21a, 21b, 21c erstellt wurden, und die derselben Spaltenposition $y_1$,... $y_5$ zugeordnet sind, und die denselben Gegenstandsbereich zeigen wie der jeweils ausgewählte Eintrag.

In der schematischen Darstellung einer Bildstapel-Datenstruktur S in **Fig. 3a** enthalten die Einträge $E_1$, $E_2$, $E_3$ vom selben Gegenstandsbereich herrührende Helligkeitswerte, die mit jeweils unterschiedlichen Sensorzeilen 21a, 21b, 21c erstellt wurden. Die Einträge $E_1$, $E_2$, $E_3$ besitzen dabei jeweils die Spaltenposition $y_1$ und Zeilenindizes $z_1$, ..., $z_4$, die vom Zeilenindex des jeweils ausgewählten Eintrags $E_1$, $E_2$, $E_3$ verschieden sind.

Bei der Suche nach derartigen Einträgen wird dabei beispielsweise ausgehend von einem ausgewählten Eintrag $E_2$ jeweils ein weiterer Eintrag $E_3$ ermittelt, der einen Zeilenindex $z_3$ aufweist, der größer ist als der Zeilenindex $z_2$ des jeweils ausgewählten Eintrags $E_2$ und jeweils ein Eintrag $E_1$, der einen Zeilenindex $z_1$ aufweist, der kleiner ist als der Zeilenindex $z_2$ des jeweils ausgewählten Eintrags $E_2$.

Alternativ können ausgehend von einem jeweils ausgewählten Eintrag $E_1$ auch beispielsweise zwei verschiedene Einträge $E_2$, $E_3$ ermittelt werden, deren Zeilenindex $z_2$, $z_3$ größer ist, als der Zeilenindex $z_1$ des ausgewählten Eintrags $E_1$

Alternativ können ausgehend von einem jeweils ausgewählten Eintrag $E_3$ auch beispielsweise zwei verschiedene Einträge $E_1$, $E_2$ ermittelt werden, deren Zeilenindex $z_1$, $z_2$ kleiner ist, als der Zeilenindex $z_3$ des ausgewählten Eintrags $E_3$.

Bei der in **Fig. 3a** schematisch dargestellten Bildstapel-Datenstruktur S wird ausgehend von ausgewählten Eintrag $E_2$, dem der Zeilenindex $z_2$ zugeordnet ist, nach Einträgen gesucht, die derselben Spaltenposition $y_1$ zugeordnet sind und die denselben Gegenstandsbereich zeigen. Im gezeigten Ausführungsbeispiel wird dabei nach Einträgen $E_1$, $E_3$ gesucht, deren Zeilenindexunterschied beispielsweise gleich eins ist bzw die von einer Sensorzeile stammen, die unmittelbar mit der Sensorzeile benachbart ist, von der der Helligkeitswert in Eintrag $E_2$ erstellt wurde. Die Suche liefert in diesem Fall als Ergebnis die Einträge $E_1$, dem der Zeilenindex $z_1$ zugeordnet ist und $E_3$, dem der Zeilenindex $z_3$ zugeordnet ist.

Alternativ können auch andere Suchen ausgehend vom jeweils ausgewählten Eintrag, der einer Sensorzeile 21a, 21b, 21c zugeordnet ist, nach zumindest zwei Einträgen, deren Helligkeitswerte von anderen Sensorzeilen 21a, 21b, 21c erstellt wurden und die derselben Spaltenposition $y_1$,... $y_5$ zugeordnet sind durchgeführt werden, die denselben Gegenstandsbereich zeigen, wie der jeweilige ausgewählte Eintrag $E_1$, $E_2$, $E_3$.

Anschließend werden die Abstände $d_{21}$, $d_{23}$ hinsichtlich des Aufnahmeindex $t_1$, ..., $t_9$ jeweils zwischen dem ausgewählten Eintrag $E_1$, $E_2$, $E_3$ und jeweils einem der so aufgefundenen Einträge unter Berücksichtigung von Subpixel-Arithmetik berechnet. Dies bedeutet, dass die einzelnen ermittelten Abstände $d_{21}$, $d_{23}$ einen nicht ganzzahligen Wert aufweisen können. Bei dem in **Fig. 3a** schematisch dargestellten Ausführungsbeispiel wird somit ausgehend vom ausgewählten Eintrag $E_2$ der Abstand $d_{21}$ zum ermittelten Eintrag $E_1$ und der Abstand $d_{23}$ zum ermittelten Eintrag $E_3$ ermittelt.

Aufgrund der Anwendung von Subpixel-Arithmetik bei der Berechnung der Abstände $d_{21}$, $d_{23}$ können sich gegebenenfalls nicht ganzzahlige Abstände $d_{21}$, $d_{23}$ zwischen einem jeweils ausgewählten Eintrag $E_1$, $E_2$, $E_3$ und den zugehörigen aufgefundenen Einträgen ergeben. Die Ermittlung solcher Abstände unter Verwendung von Subpixel-

**EP 3 518 180 B1**

Arithmetik ist beispielsweise in D. Scharstein and R. Szeliski. A taxonomy and evaluation of dense twoframe stereo correspondence algorithms. International Journal of Computer Vision, 47(1/2/3):7-42, April-June 2002 beschrieben.

Anschließend wird als nächster Verfahrensschritt ein Abstandsmittelwert $d_{21}^*$, $d_{23}^*$ der Abstände $d_{21}$, $d_{23}$ für einzelne im Folgenden als unbereinigt bezeichnete Aufnahmeindizes $t_1$, ..., $t_9$ und sowie für einzelne Zeilenindizes $z_1$, ..., $z_4$ über ausgewählte, insbesondere alle Spaltenpositionen $y_1$,... $y_5$ gebildet **(Fig. 3b)**. Der Abstandsmittelwert $d_{21}^*$, $d_{23}^*$ wird dabei insbesondere jeweils für beide Abstände $d_{21}$, $d_{23}$ separat gebildet. Die einzelnen so ermittelten Abstandsmittelwerte $d_{21}^*$, $d_{23}^*$ werden einzelnen Elementen $E_1^*$, ... einer weiteren Datenstruktur $S^*$ zugewiesen, wobei die einzelnen Elemente $E_1^*$, ... jeweils durch einen Aufnahmeindex $t_1$, ..., $t_9$ und einen Zeilenindex $z_1$, ..., $z_4$ charakterisiert sind. Der Abstandsmittelwert $d_{21}^*$, $d_{23}^*$ weist dabei bereits aufgrund der Mittelwertbildung sowie der Subpixel-Arithmetik typischerweise einen nicht ganzzahligen Wert auf.

Wie in **Fig. 3b** dargestellt, wird einem ausgewählten Element $E_2^*$ mit dem Zeilenindex $z_2$ und dem Aufnahmeindex $t_5$ ein weiteres Element $E_1^*$ mit einem benachbarten Zeilenindex $z_1$ zugewiesen, dessen Aufnahmeindexunterschied der unbereinigten Aufnahmeindizes zum ausgewählten Element dem Abstandsmittelwert $d_{21}^*$ entspricht. In vorliegenden vereinfachten Fall hat der ermittelte Abstandsmittelwert $d_{21}^*$ den Wert von -4. Der unbereinigte Aufnahmeindex $t_5$ des ausgewählten Elements $E_2^*$ hat den Wert 5, sodass als weiteres Element $E_1^*$ unter den Elementen mit dem benachbarten Zeileindex $z_1$ das Element mit dem unbereinigten Aufnahmeindex $t_1 = 5-4 = 1$ ausgewählt und dem ausgewählten Element $E_2^*$ zugewiesen wird.

Ebenso wird dem ausgewählten Element $E_2^*$ mit dem Zeilenindex $z_2$ und dem Aufnahmeindex $t_5$ ein weiteres Element $E_3^*$ mit einem benachbarten Zeilenindex $z_3$ zugewiesen, dessen Aufnahmeindexunterschied der unbereinigten Aufnahmeindizes dem Abstandsmittelwert $d_{23}^*$ entspricht. Im vorliegenden vereinfachten Fall hat der ermittelte Abstandsmittelwert $d_{23}^*$ den Wert 3. Da der unbereinigte Aufnahmeindex $t_5$ des ausgewählten Elements $E_2^*$ den Wert 5 aufweist, wird als weiteres Element $E_3^*$ unter den Elementen mit dem benachbarten Zeileindex $z_3$ das Element mit dem unbereinigten Aufnahmeindex $t_8 = 5+3 = 8$ ausgewählt und dem ausgewählten Element $E_2^*$ zugeordnet.

Die Zuordnung für den allgemeinen Fall, dass der ermittelte Abstandsmittelwert nicht ganzzahlig ist, wird im Folgenden anhand des ausgewählten Elements $E_5^*$ mit dem Zeilenindex $z_3$ näher dargestellt. Diesem ausgewählten Element $E_5^*$ werden zwei gemeinsame weitere Elemente $E_{4,1}^*$ $E_{4,2}^*$ mit jeweils demselben benachbarten Zeilenindex $z_2$ zugewiesen, deren Aufnahmeindexunterschied der unbereinigten Aufnahmeindizes dem Abstandsmittelwert $d_{54}^*$ am nächsten kommt. In vorliegenden Fall hat der ermittelte Abstandsmittelwert $d_{54}^*$ einen Wert von -3,6. Der unbereinigte Aufnahmeindex $t_5$ des ausgewählten Elements $E_5^*$ hat den Wert 5, sodass als gemeinsame weitere Elemente $E_{4,1}^*$ $E_{4,2}^*$ unter den Elementen mit dem benachbarten Zeileindex $z_2$ die Elemente $E_{4,1}^*$ $E_{4,2}^*$ mit den unbereinigten Aufnahmeindizes $t_1 = \lfloor 5-3,6 \rfloor = \lfloor 1,4 \rfloor = 1$ und $t_2 = \lceil 5-3,6 \rceil = \lceil 1,4 \rceil = 2$ ausgewählt und dem ausgewählten Element $E_5^*$ zugeordnet werden.

Ebenso, werden dem ausgewählten Element $E_5^*$ mit dem Zeilenindex $z_3$ und dem Aufnahmeindex $t_5$ zwei weitere gemeinsame Elemente $E_{6,1}^*$ $E_{6,2}^*$ mit jeweils demselben benachbarten Zeilenindex $z_4$ zugewiesen, deren Aufnahmeindexunterschied der unbereinigten Aufnahmeindizes dem Abstandsmittelwert $d_{56}^*$ am nächsten kommt. Im vorliegenden Fall hat der ermittelte Abstandsmittelwert $d_{56}^*$ einen Wert von 3,1. Der unbereinigte Aufnahmeindex $t_5$ des ausgewählten Elements $E_5^*$ hat den Wert 5, sodass als gemeinsame weitere Elemente $E_{6,1}^*$ $E_{6,2}^*$ unter den Elementen mit dem benachbarten Zeilenindex $z_4$ die Elemente $E_{6,1}^*$ $E_{6,2}^*$ mit den unbereinigten Aufnahmeindizes $t_8 = \lfloor 5+3,1 \rfloor = \lfloor 8,1 \rfloor = 8$ und $t_9 = \lceil 5+3,1 \rceil = \lceil 8,1 \rceil = 9$ ausgewählt und dem ausgewählten Element $E_5^*$ zugeordnet werden.

Anschließend wird eine Indexbereinigung des Aufnahmeindex $t_1$, ..., $t_9$ für die Bildstapel-Datenstruktur S durchgeführt und für jeden Aufnahmeindex $t_1$, ..., $t_9$ ein bereinigter Aufnahmeindex $t'_1$, ..., $t'_9$ als Ersatzwert für den Aufnahmeindex $t_1$, ..., $t_9$ mit einem Optimierungsverfahren O ermittelt. Dem Optimierungsverfahren O werden dabei die folgenden Bedingungen vorgegeben:
Als Hauptbedingung ist vorgegeben, dass die einzelnen Differenzen zwischen dem bereinigten Aufnahmeindex $t'_5$ eines ausgewählten Elements $E_2^*$ und dem bereinigten Aufnahmeindex $t'_1$ (bzw $t'_8$) eines ihm jeweils zugeordneten Elements $E_1^*$ (bzw $E_3^*$) untereinander gleich sind ($t'_5 - t'_1 = t'_8 - t'_5$). Im Falle von mehreren gemeinsam dem ausgewählten Element $E_5^*$ zugeordneten Elementen $E_{4,1}^*$, $E_{4,2}^*$ kann der bereinigte Aufnahmeindex $t'$ der zugeordneten Elemente durch Gewichtung der bereinigten Aufnahmeindizes der gemeinsam zugeordneten Elemente $E_{4,1}^*$, $E_{4,2}^*$ ermittelt werden, wobei der jeweilige bereinigte Aufnahmeindex umso stärker gewichtet wird, je näher die Differenz beim jeweiligen Abstandsmittelwert liegt.

Sofern die Zeilenindexunterschiede zwischen dem ausgewählten Element $E_2^*$ und den ihm jeweils zugeordneten Elementen $E_1^*$ $E_3^*$ nicht gleich sein sollten, können die betreffenden Differenzen jeweils mit einem zum Zeilenindexunterschied zwischen einem jeweils ausgewählten Element und diesem jeweils zugeordneten Elementen $E_1^*$ $E_3^*$ invers proportionalen Kompensationsfaktor $k_{21}^*$, $k_{23}^*$ gewichtet werden.

Als Nebenbedingung kann vorgegeben werden, dass bereinigte Aufnahmeindizes $t'_1$, ..., $t'_9$ möglichst nahe beim jeweiligen ursprünglichen unbereinigten Aufnahmeindex $t_1$, ..., $t_9$ liegen.

Bei dem in **Fig. 3b** gezeigten Ausführungsbeispiel beträgt der Zeilenindexunterschied zwischen dem ausgewählten Element $E_2^*$ und den aufgefundenen Elementen $E_1^*$, $E_3^*$ jeweils 1, sodass eine separate Kompensation der Abstände nicht vorgenommen werden braucht. Würde beispielsweise an Stelle des Elements $E_3^*$ ein anderes Element, das den selben Gegenstandsbereich zeigt, wie das Element $E_2^*$ jedoch einen höheren Zeilenindex $z_1, ..., z_4$ besitzt, gesucht, so ist der Zeilenindexunterschied zwischen dem Element $E_2^*$ und dem so aufgefundenen Element größer als 1, beispielsweise 2, d.h. größer als der Zeilenindexunterschied zwischen den Elementen $E_1^*$ und $E_2^*$. In diesem Fall ist ein Kompensationsfaktor, beispielsweise 1/2, bei der Vorgabe des Optimierungsproblems zu berücksichtigen, sodass der Abstand zwischen dem ausgewählten Element und dem aufgefundenen Element mit 1/2 zu multiplizieren ist.

Ein zur Bestimmung von bereinigten Aufnahmeindizes $t'_1, ..., t'_9$ für die Bildstapel-Datenstruktur S zu lösendes Ausführungsbeispiel eines Optimierungsproblems wird im Folgenden im Detail beschrieben:
Das zur lösende Optimierungsproblem ist wie folgt definiert:

$$\min_{t'} \frac{1}{c_1} \left\| E_d(t') \right\|_{c1}^{c_1} + \frac{\lambda_1}{c_2} \left\| E_t(t') \right\|_{c_2}^{c_2} + \frac{\lambda_2}{c_3} \left\| E_s(t') \right\|_{c_3}^{c_3}$$

Dabei geben $\lambda_1$ und $\lambda_2$ Gewichtungsfaktoren für die einzelnen einfließenden Terme an, und die Faktoren $c_1$, $c_2$, and $c_3$ stellen beispielsweise quadratische Unterdrückungsfaktoren $c_1 = c_2 = c_3 = 2$ dar.

Bei der angegebenen Gleichung des Optimierungsverfahrens O repräsentiert der erste Term $E_d(t')$ die Abstandsgleichungen in der Bildstapel-Datenstruktur S in Matrix-Schreibweise:

$$E_d(t') = (D^\circ + D^\sim)t'$$

Da in einer idealen Bildstapel-Datenstruktur S zwischen einem jeweils ausgewählten Eintrag $E_2$ und den aufgefundenen Einträgen $E_1$, $E_3$ die ermittelten Abstände $d_{21}$, $d_{23}$ gleich sind, können Rückschlüsse auf die tatsächlichen bereinigten Aufnahmeindizes $t'_1, ..., t'_9$ eines ausgewählten Eintrags $E_1$, $E_2$, $E_3$ mit Hilfe des ersten Terms der Optimierungsgleichung erzielt werden.

Werden daher die Abstände $d_{21}$, $d_{23}$ bzw. die Abstandsmittelwerte $d_{21}^*$, $d_{23}^*$ bestimmt, können mittels des ersten Terms der Gleichung des Optimierungsverfahrens O Vorgaben für die bereinigten Aufnahmeindizes $t'_1, ..., t'_9$ ermittelt werden, mit denen die ermittelten Transport-Artefakte bereinigt werden können. Bei $D^\circ$ und $D^\sim$ handelt es sich dabei jeweils um eine n (m-2) x n Matrix. Die Matrix $D^\circ$ betrifft dabei jeweils die Abstände $d_{21}^*$, $d_{54}^*$ die vom jeweils ausgewählten Element zu einem Element mit einem Zeilenindex ermittelt wurden, der um 1 kleiner ist als der Zeilenindex des ausgewählten Elements. Die Matrix $D^\sim$ betrifft dabei jeweils die Abstände $d_{23}^*$, $d_{56}^*$ die vom jeweils ausgewählten Element zu einem Element mit einem Zeilenindex ermittelt wurden, der um 1 größer ist als der Zeilenindex des ausgewählten Elements.

In den beiden Matrizen $D^\circ$, $D^\sim$ finden sich jeweils für sämtliche herangezogenen Zeilen der Matrix-Datenstruktur jeweils Einträge, mit denen der Einfluss der jeweils ermittelten Abstandsmittelwerte vorgegeben wird.

Dabei bezeichnet $d_i^\circ$ den jeweiligen ermittelten Abstandsmittelwert (z.B. $d_{21}^*$) zwischen dem Element und dem Abbild desselben Gegenstandsbereichs in der jeweils benachbarten Zeile, deren Zeilenindex um 1 verringert ist, zu einem bestimmten Aufnahmezeitpunkt.

Weiters bezeichnet $d_i^\sim$ den jeweiligen ermittelten mittleren Abstandswert (z.B. $d_{23}^*$) zwischen dem Element und dem Abbild desselben Gegenstandsbereichs in der jeweils benachbarten Zeile, deren Zeilenindex um 1 verringert ist, zu einem bestimmten Aufnahmezeitpunkt.

Im Folgenden wird die Erstellung der Einträge einer Zeile der Matrix $D^\circ + D^\sim$ gezeigt. Dieser Schritt wird für jeden Aufnahmeindex sowie für jede Kombination von Zeilen, in denen miteinander übereinstimmende Abbilder desselben Gegenstands gefunden wurden durchgeführt. Dabei wird jeweils eine eigene Zeile in der Matrix $D^\circ + D^\sim$ erstellt.

Ganz allgemein bezeichnet $\lceil d_i^\circ \rceil$ (bzw. $\lceil d_i^\sim \rceil$) die kleinste ganze Zahl, die größer ist als $d_i^\circ$ (bzw. $d_i^\sim$). Auch bezeichnet $\lfloor d_i^\circ \rfloor$ (bzw. $\lfloor d_i^\sim \rfloor$) die größte ganze Zahl, die kleiner ist als $d_i^\circ$ (bzw. $d_i^\sim$).

Für die Optimierung wird eine Zuordnung zwischen dem bereinigten Aufnahmeindex $t'_i$ eines ausgewählten Elements $E_2^*$, $E_5^*$ sowie den bereinigten Aufnahmeindizes $t'_{i+\lceil di^\circ \rceil}$, $t'_{i+\lceil di \sim \rceil}$, $t'_{i+\lfloor di^\circ \rfloor}$, $t'_{i+\lfloor di \sim \rfloor}$ von durch die Abstandmittelwerte $d_i^\circ$, $d_i^\sim$ festgelegten Elementen $E_1^*$, $E_3^*$, $E_{4,1}^*$, $E_{4,2}^*$, $E_{6,1}^*$, $E_{6,2}^*$ vorgegeben.

Im vorliegenden Ausführungsbeispiel ergeben sich die Einträge der Matrix $D^\circ$ durch die Differenz des bereinigten Aufnahmeindex $t'_i$ des ausgewählten Elements $E_5^*$ und des jeweiligen Aufnahmeindex $t'_{i+\lceil di^\circ \rceil}$, $t'_{i+\lfloor di^\circ \rfloor}$ der durch den Abstandsmittelwert $d_i^\circ$ festgelegten gemeinsam zugeordneten Elemente $E_{4,1}^*$, $E_{42}^*$, Die durch die Matrix $D^\circ$ festgelegte Linearkombination ergibt dabei:

$$-t_i' + t_{i+\lfloor d°_i\rfloor}'(1 - d°_i + \lfloor d°_i\rfloor) + t_{i+\lceil d°_i\rceil}'(d°_i - \lfloor d°_i\rfloor) \approx 0$$

Im vorliegenden Ausführungsbeispiel ergeben sich die Einträge der Matrix D~ durch die Differenz des bereinigten Aufnahmeindex $t_i'$ des ausgewählten Elements $E_5^*$ und des jeweiligen Aufnahmeindex $t_{i+\lceil di\sim\rceil}'$, $t_{i+\lfloor di\sim\rfloor}'$ der durch den Abstandsmittelwert $d_i\sim$ festgelegten gemeinsam zugeordneten Elemente $E_{6,1}^*$, $E_{6,2}^*$ Die durch die Matrix D~ festgelegte Linearkombination ergibt dabei:

$$-t_i' + t_{i+\lfloor\tilde{d_i}\rfloor}'(1 - \tilde{d_i} + \lfloor\tilde{d_i}\rfloor) + t_{i+\lceil\tilde{d_i}\rceil}'(\tilde{d_i} - \lfloor\tilde{d_i}\rfloor) \approx 0$$

Aufgrund der Gewichtung der einzelnen Einträge der Matrix D° + D~ können die Werte des bereinigten Aufnahmeindex $t_i'$ entsprechend der ermittelten Abstandmittelwerte $d_i°$, $d_i\sim$, die naturgemäß nicht gleichverteilt sind, im Rahmen der Optimierung angepasst werden. Diese Formel ermöglicht es auch, eine lineare Interpolierung der subpixelgenauen Abstandsmittelwerte $d_i°$, $d_i\sim$ (z.B. $d_{21}^*$, $d_{23}^*$) im Rahmen der Optimierung zu verwenden:

$$-2t_i' + t_{i+\lfloor d°_i\rfloor}'(1 - d°_i + \lfloor d°_i\rfloor) + t_{i+\lceil d°_i\rceil}'(d°_i - \lfloor d°_i\rfloor)$$
$$+ t_{i+\lfloor\tilde{d_i}\rfloor}'(1 - \tilde{d_i} + \lfloor\tilde{d_i}\rfloor) + t_{i+\lceil\tilde{d_i}\rceil}'(\tilde{d_i} - \lfloor\tilde{d_i}\rfloor) \approx 0$$

Mit der hier gewählten Gewichtung der einzelnen bereinigten Aufnahmeindizes wird erreicht, dass die Zeilensummen der einzelnen Matrizen D°, D~ sowie der Matrix D°, D~ gleich Null ist.
Dieser Abstandsterm stellt daher sicher, dass bereinigte Aufnahmeindizes $t_1'$, ..., $t_9'$ linear verlaufende Epipolarlinien für einander entsprechende Elemente gewährleisten.
Zur Berücksichtigung von Abständen $d_i°$, $d_i\sim$; $d_{21}^*$, $d_{23}^*$ zwischen einem jeweils ausgewählten Element $E_2^*$, $E_5^*$ und den jeweils zugeordneten Elementen $E_1^*$, $E_3^*$, $E_{4,1}^*$, $E_{4,2}^*$, $E_{6,1}^*$, $E_{6,2}^*$ mit beliebigen Zeilenindexunterschieden b, b* fließt gegebenenfalls der invers proportionale Kompensationsfaktor $k_{21}^*$, $k_{23}^*$ in den Abstandsterm ein.

$$\left(-t_i' + t_{i+\lfloor d°_i\rfloor}'(1 - d°_i + \lfloor d°_i\rfloor) + t_{i+\lceil d°_i\rceil}'(d°_i - \lfloor d°_i\rfloor)\right) k_{23}^*$$
$$- \left(-t_i' + t_{i+\lfloor\tilde{d_i}\rfloor}'(1 - \tilde{d_i} + \lfloor\tilde{d_i}\rfloor) + t_{i+\lceil\tilde{d_i}\rceil}'(\tilde{d_i} - \lfloor\tilde{d_i}\rfloor)\right) k_{21}^* \approx 0$$

Wie oben beschrieben, entfällt der Kompensationsfaktor, wenn Elemente $E_1^*$, $E_2^*$, $E_3^*$ herangezogen werden, die äquidistant verteilte Zeilenindizes $z_1$, ..., $z_4$ aufweisen.
Da alle Sensorzeilen 21a, 21b, 21c der Bildaufnahmeeinheit 2 den Gegenstand 1 gleichzeitig aufnehmen und dabei verschiedene Gegenstandsbereiche des Gegenstands 1 erfassen, treten bei einem jeweils betrachteten Aufnahmeindex $t_1$, ..., $t_9$ dieselben Transport-Artefakte in allen diesem Aufnahmeindex $t_1$, ..., $t_9$ zugeordneten Zeilenindexpositionen $z_1$, ..., $z_4$ auf. Somit kann ein bereinigter Aufnahmeindex $t_1'$, ..., $t_9'$ unter Zuhilfenahme aller Zeilenindexpositionen $z_1$, ..., $z_4$ bestimmt werden.
Der zweite Term $E_x(t')$ des durch das Optimierungsverfahren O zu lösenden Optimierungsproblems stellt sicher, dass bereinigte Aufnahmeindizes $t_1'$, ..., $t_9'$ eines Elements $E_1^*$, $E_2^*$, $E_3^*$ möglichst nahe beim jeweiligen Aufnahmeindex $t_1$, ..., $t_9$ des betreffenden Elements $E_1^*$, $E_2^*$, $E_3^*$ liegen:

$$E_t(t') = t - t'$$

Dies stellt sicher, dass der erwartete Fehler für einen jeweils betrachteten Aufnahmeindex $t_1$, ..., $t_9$ klein ist, d.h. dass ein bereinigter Aufnahmeindex $t_1'$, ..., $t_9'$ ähnlich zu dem, für eine ideale Bewegung angenommenen, Aufnahmeindex $t_1$, ..., $t_9$ ist. Somit ist sichergestellt, dass die tatsächliche Bewegung des Gegenstands 1 gegenüber der Bildaufnahmeeinheit 2 ähnlich der angenommenen idealen Bewegung mit der ein Gegenstand 1 durch den Aufnahmebereich der Bildaufnahmeeinheit 2 transportiert wird, ist. Diese Maßnahme stabilisiert auch die Lösung des Gleichungssystems, das durch das Optimierungsverfahren O zu lösen ist und bewahrt ihre Monotonie. Dabei wird pro Aufnahmeindex $t'_1$, ..., $t'_9$ eine Gleichung zum Gleichungssystem hinzugefügt.

Der dritte Term $E_s(t')$ des durch das Optimierungsverfahren O zu lösenden Optimierungsproblems stellt sicher, dass benachbarte bereinigte Aufnahmeindizes $t'_1$, ..., $t'_9$ ähnliche Abstände aufweisen und keine sprunghaften Veränderungen auftreten:

$$E_s\left(t'\right) = \Delta t'$$

.

$\Delta$ gibt dabei eine Filterfunktion der Form [1,-2,1] an.

Dies stellt sicher, dass der Transport des Gegenstands 1 gleichmäßig in der Bildstapel-Datenstruktur zu verfolgen ist. Pro bereinigtem Aufnahmeindex $t'_1$, ..., $t'_9$ wird dabei eine Gleichung zum Gleichungssystem hinzugefügt. Für einen jeweils betrachteten bereinigten Aufnahmeindex $t'_1$, ..., $t'_9$ weisen diese Gleichungen die folgende Form auf:

$$-2t'_i + t'_{i-1} + t'_{i+1} \approx 0$$

Optional kann ein Term erster Ordnung im zu lösenden Optimierungsproblem, berücksichtigt werden, bei dem die Ähnlichkeit zwischen direkt benachbarten bereinigten Aufnahmeindizes $t'_1$, ..., $t'_9$ berücksichtigt wird. Pro bereinigtem Aufnahmeindex $t'_1$, ..., $t'_9$ wird dabei eine Gleichung zum Gleichungssystem hinzugefügt.

$$t'_i - t'_{i-1} \approx h$$

,

wobei normalerweise **$h = 1$**

Durch die Verwendung eines derartiges Terms ist sichergestellt, dass die Bewegung des Gegenstands 1 gleichmäßig in der Bildstapel-Datenstruktur S mit bereinigten Aufnahmeindizes $t'_1$, ..., $t'_9$ verfolgt werden kann.

Wird nun das derart definierte Optimierungsproblem mittels des Optimierungsverfahrens O gelöst, stehen als Ergebnis die ermittelten bereinigten Aufnahmeindizes $t'_1$, ..., $t'_9$ zur Verfügung. Auch wenn für die Optimierung unterschiedliche Verfahren herangezogen werden können, kann besonders bevorzugt das in Stephen Boyd and Lieven Vandenberghe, Convex Optimization, 2004 beschriebene Verfahren verwendet werden.

Bei einem erfindungsgemäßen Verfahren zur Erstellung einer Bildstapel-Datenstruktur S kann optional dem Optimierungsverfahren O als zusätzliche Nebenbedingung $E_s(t')$ vorgegeben werden, dass bereinigte Aufnahmeindizes $t'_1$, ..., $t'_9$ in Transportrichtung x möglichst gleich verteilt liegen, sodass sie zu ihren benachbarten Aufnahmeindizes $t'_1$, ..., $t'_9$ in Transportrichtung x jeweils möglichst denselben Abstand aufweisen.

Optional kann im Anschluss an die Ermittlung der bereinigten Aufnahmeindizes $t'_1$, ..., $t'_9$ eine entzerrte Bildstapel-Datenstruktur erstellt werden, die in ihrem Aufbau und Umfang der Bildstapel-Datenstruktur S entspricht. Dazu wird für alle Sensorzeilen 21a, 21b, 21c und Spaltenpositionen $y_1$,... $y_5$ separat eine Interpolation unter der Vorgabe durchgeführt, dass die Interpolierende h(t) für die Einträge $E_1$, $E_2$, $E_3$ interpolierte Helligkeitswerte bei Vorgabe des jeweiligen bereinigten Aufnahmeindex $t'_1$, ..., $t'_9$ liefert. Dabei wird die Interpolierende h(t) an den durch den ursprünglichen Aufnahmeindex $t_1$, ..., $t_9$ festgelegten Positionen ausgewertet und derart die entzerrte Bildstapel-Datenstruktur erstellt.

Die nachfolgende Interpolation wird für jede einzelne Spalte $y_1$,... $y_5$ sowie für jede einzelne Sensorzeile separat vorgenommen, wobei die Helligkeitswerte für die bereinigte Bildstapel-Datenstruktur unter Vorgabe des jeweils bereinigten Aufnahmeindex $t'_1$, ..., $t'_9$ neu bestimmt werden.

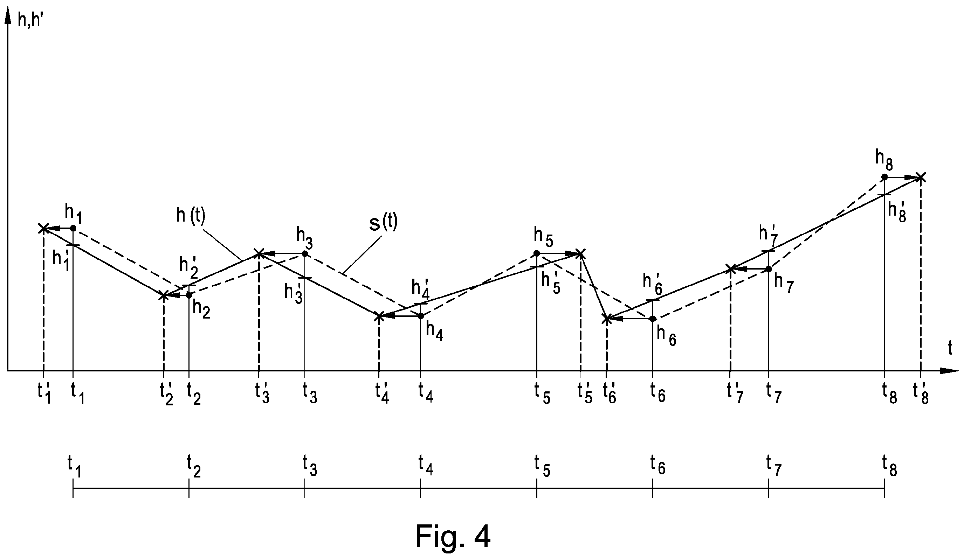

In **Fig. 4** ist ein sich aus den Helligkeitswerten ohne vorgenommene Optimierung ergebendes Originalsignal s(t) dargestellt. Weiters ist dargestellt, dass die den einzelnen Helligkeitswerten $h_1$, ..., $h_9$ zugeordneten Positionen aufgrund der Optimierung von den Aufnahmeindizes $t_1$, ..., $t_9$ auf die bereinigten Aufnahmeindizes $t'_1$, ..., $t'_9$ verschoben werden. Die so verschobenen Helligkeitswerte werden durch die dargestellte Interpolierende h(t) interpoliert. Die Interpolierende h(t) wird an den durch den ursprünglichen Aufnahmeindex $t_1$, ..., $t_9$ festgelegten Positionen ausgewertet, wobei die einzelnen Helligkeitswerte $h'_1$, ..., $h'_9$ an den betreffenden Positionen erhalten werden, und derart ein bereinigtes Signal erstellt wird.

**Patentansprüche**

1. Verfahren zur Erstellung einer Bildstapel-Datenstruktur (S), wobei

- ein Gegenstand (1) entlang einer Transportrichtung (x) durch den Aufnahmebereich einer Bildaufnahmeeinheit (2) bewegt wird,
- von der Bildaufnahmeeinheit (2) Aufnahmen ($v_1$, ..., $v_4$) erstellt werden,

  - wobei die Bildaufnahmeeinheit (2) über eine Anzahl von Sensorzeilen (21a, 21b, 21c) verfügt, die normal zur Transportrichtung (x) des Gegenstands (1) und in Bezug zur Transportrichtung (x) hintereinander, insbesondere parallel zueinander ausgerichtet, angeordnet sind, insbesondere Zeilen eines Flächensensors bilden,
  - wobei die einzelnen Aufnahmen ($v_1$, ..., $v_4$) jeweils Zeilenaufnahmen umfassen, die jeweils mittels einer Sensorzeile (21a, 21b, 21c) zu vorgegebenen Aufnahmezeitpunkten erstellt werden,
  - wobei die vorgegebenen Aufnahmezeitpunkte für alle Aufnahmen gleich sind und dem Transportfortschritt entlang der Transportrichtung (x) entsprechen,

- eine dreidimensionale Bildstapel-Datenstruktur (S) aus den Aufnahmen ($v_1$, ..., $v_4$) des Gegenstands (1) erstellt wird, wobei die einzelnen Einträge ($E_1$, $E_2$, $E_3$) der Bildstapel-Datenstruktur (S) für eine Anzahl von Aufnahmeindizes ($t_1$, ..., $t_9$) jeweils zumindest einen Helligkeitswert für die einzelnen Pixel der Sensorzeilen (21a, 21b, 21c) enthalten, wobei die Indizes der dreidimensionalen Bildstapel-Datenstruktur (S) festgelegt sind durch

  i) einen den Transportfortschritt kennzeichnenden ganzzahligen Aufnahmeindex ($t_1$, ..., $t_9$) zu dem der betreffende Helligkeitswert erstellt wurde,
  ii) einen die Position der Sensorzeile (21a, 21b, 21c) in Transportrichtung (x) in der sich das Pixel befindet, das den betreffenden Helligkeitswert ermittelt hat, kennzeichnenden Zeilenindex ($z_1$, ..., $z_4$), und
  iii) die Spaltenposition ($y_1$, ..., $y_5$) desjenigen Pixels, das den betreffenden Helligkeitswert ermittelt hat, in Bezug auf die Sensorzeilen (21a, 21b, 21c) normal zur Transportrichtung (x),

  **dadurch gekennzeichnet, dass**
  - für einzelne ausgewählte Einträge, insbesondere für alle Einträge ($E_1$, $E_2$, $E_3$), der Bildstapel-Datenstruktur (S)

    - ausgehend vom jeweils ausgewählten Eintrag ($E_2$, $E_5$), der einer Sensorzeile (21a, 21b, 21c) zugeordnet ist, nach zumindest zwei Einträgen, deren Helligkeitswerte von anderen Sensorzeilen (21a, 21b, 21c) erstellt wurden und die derselben Spaltenposition ($y_1$, ..., $y_5$) zugeordnet sind, gesucht wird, die denselben Gegenstandsbereich zeigen, wie der jeweilige ausgewählte Eintrag ($E_2$, $E_5$), und deren Zeilenindizes ($z_1$, $z_2$, $z_3$) vom Zeilenindex des ausgewählten Eintrags verschieden sind, wobei insbesondere die Differenz von deren Zeilenindizes zum Zeilenindex des ausgewählten Eintrags ($E_2$, $E_5$) einen von mehreren vorgegebenen Werten aufweist,
    - die Abstände ($d_{21}$, $d_{23}$) hinsichtlich des Aufnahmeindex ($t_1$, $t_5$, $t_8$) jeweils zwischen dem ausgewählten Eintrag ($E_1$, $E_2$, $E_3$) und jeweils einem der so aufgefundenen Einträge unter Verwendung von Subpixel-Arithmetik berechnet werden,

    - ein Abstandsmittelwert ($d_{21}^*$, $d_{23}^*$) der Abstände ($d_{21}$, $d_{23}$) für einzelne Aufnahmeindizes ($t_1$, $t_5$, $t_8$) und Zeilenindizes ($z_1$, .., $z_4$) über ausgewählte, insbesondere alle, Spaltenpositionen ($y_1$, ..., $y_5$), insbesondere jeweils für beide Abstände ($d_{21}$, $d_{23}$) separat, gebildet wird,
    - für eine Anzahl von Paaren umfassend jeweils einen der Aufnahmeindizes ($t_1$, $t_5$, $t_8$) und einen der Zeilenindizes ($z_1$, .., $z_4$) jeweils ein Element ($E_1^*$, ...) erstellt wird, dem die jeweiligen Abstandsmittelwerte ($d_{21}^*$, $d_{23}^*$) zugeordnet werden, und
    - einer Anzahl von ausgewählten Elementen ($E_2^*$, $E_5^*$) jeweils weitere Elemente ($E_1^*$, $E_3^*$, $E_{4,1}^*$, $E_{4,2}^*$, $E_{6,1}^*$, $E_{6,2}^*$) mit relativ zum jeweiligen ausgewählten Element ($E_2^*$, $E_5^*$) vorgegebenen Zeilenindex zugewiesen werden, bei denen der Unterschied der unbereinigten Aufnahmeindizes ($t_1$, ..., $t_9$) des ausgewählten Elements ($E_2^*$, $E_5^*$) und des weiteren Elements ($E_1^*$, $E_3^*$, $E_{4,1}^*$, $E_{4,2}^*$, $E_{6,1}^*$, $E_{6,2}^*$) dem, dem ausgewählten Element ($E_2^*$, $E_5^*$) zugeordneten, jeweiligen Abstandsmittelwert ($d_{21}^*$, $d_{23}^*$) entspricht, oder diesem am nächsten kommt, wobei gegebenenfalls die beiden mit demselben Zeilenindex versehenen weiteren Elemente ($E_{4,1}^*$, $E_{4,2}^*$, $E_{6,1}^*$, $E_{6,2}^*$) mit den beiden dem jeweiligen Abstandsmittelwert ($d_{21}^*$, $d_{23}^*$) am nächsten kommenden Unterschieden der unbereinigten Aufnahmeindizes dem jeweiligen ausgewählten Element ($E_2^*$, $E_5^*$) gemeinsam zugewiesen werden,

und

- eine Indexbereinigung des ursprünglichen Aufnahmeindex ($t_1$, $t_5$, $t_9$) durchgeführt und für jeden Aufnahmeindex ($t_1$, $t_5$, $t_9$) ein subpixel-genauer bereinigter Aufnahmeindex ($t'_1$, $t'_5$, $t'_9$) als Ersatzwert für den ursprünglichen Aufnahmeindex ($t_1$, $t_5$, $t_9$) mittels eines Optimierungsverfahrens (O) derart bestimmt wird, dass folgende Nebenbedingungen erfüllt sind:

- die einzelnen Differenzen zwischen dem bereinigten Aufnahmeindex ($t'_1$, ...) eines ausgewählten Elements ($E_2*$) und dem bereinigten Aufnahmeindex ($t'_1$, ...) eines ihm jeweils zugeordneten Elements ($E_1*$) sind untereinander gleich,
- wobei im Fall, dass die Zeilenindexunterschiede des ausgewählten Eintrags oder Elements und des ihm jeweils zugeordneten Eintrags oder Elements sich voneinander unterscheiden, die Abstandsmittelwerte ($d_{21}*$, $d_{23}*$) mit einem zum Zeilenindexunterschied der für seine Bestimmung herangezogenen Einträge oder Elemente invers proportionalen Kompensationsfaktor ($k_{21}*$, $k_{23}*$) gewichtet werden, und wobei insbesondere der bereinigte Aufnahmeindex ($t'_1$, ...) mehrerer gemeinsam zugeordneter Elemente ($E_{4,1}*$, $E_{4,2}*$) durch Gewichtung der bereinigten Aufnahmeindizes ($t'_1$, ...) der gemeinsam zugeordneten Elementen ($E_{4,1}*$, $E_{4,2}*$) ermittelt wird,
- der bereinigte Aufnahmeindex ($t'_1$, ...) eines Elements ($E_1*$, ...) liegt möglichst nahe beim jeweiligen unbereinigten Aufnahmeindex ($t_1$, ...) des betreffenden Elements ($E_1*$, ...).

2. Verfahren nach Anspruch 1, **dadurch gekennzeichnet, dass** dem Optimierungsverfahren (O) als zusätzliche Nebenbedingung vorgegeben wird, dass bereinigte Aufnahmeindizes ($t'_1$, $t'_2$, $t'_3$) in Transportrichtung (x) möglichst gleichverteilt liegen, sodass sie zu ihren benachbarten bereinigten Aufnahmeindizes ($t'_1$, $t'_2$, $t'_3$) in Transportrichtung (x) jeweils möglichst denselben Abstand oder einen vorgegebenen Abstand aufweisen.

3. Verfahren nach Anspruch 1 oder 2, **dadurch gekennzeichnet, dass** für alle Sensorzeilen (21a, 21b, 21c) und Spaltenpositionen ($y_1$, ..., $y_5$) separat eine Interpolation unter der Vorgabe durchgeführt wird, dass die Interpolierende h(t) für die Elemente ($E_1$, $E_2$, $E_3$) ermittelte Helligkeitswerte bei Vorgabe des jeweiligen bereinigten Aufnahmeindex ($t'_1$, $t'_2$, $t'_3$) liefert, und wobei die Interpolierende h(t) an den durch den ursprünglichen Aufnahmeindizes ($t_1$, $t_2$, $t_3$) festgelegten Positionen ausgewertet wird und derart eine entzerrte Bildstapel-Datenstruktur erstellt wird.

4. Verfahren nach einem der vorangehenden Ansprüche, **dadurch gekennzeichnet, dass** die Beabstandung des Zeilenindex ($z_1$, ... $z_4$) der Beabstandung der jeweiligen Sensorzeilen (21a, 21b, 21c) oder der Beabstandung der Aufnahmebereiche der Sensorzeilen (21a, 21b, 21c) entspricht.

**Claims**

1. Method for producing an image stack data structure (S), wherein

- an object (1) is moved along a transport direction (x) through the recording region of an image recording unit (2),
- recordings (v1, ..., $v_4$) are produced by the image recording unit (2)
- wherein the image recording unit (2) has a number of sensor lines (21a, 21b, 21c), which are arranged aligned perpendicular to the transport direction (x) of the object (1) and one after another with respect to the transport direction (x), in particular parallel to one another, in particular form lines of a surface sensor,
- wherein the individual recordings ($v_1$, ..., $v_4$) in each case comprise line recordings, which in each case are produced by means of sensor lines (21a, 21b, 21c) at predetermined recording times,
- wherein the predetermined recording times are the same for all recordings and correspond to the transport progress along the transport direction (x),
- a three-dimensional image stack data structure (S) is produced from the recordings ($v_1$, ..., $v_4$) of the object (1), wherein the individual entries ($E_1$, $E_2$, $E_3$) of the image stack data structure (S) for a number of recording indices ($t_1$, ..., $t_9$) contain in each case at least one brightness value for the individual pixels of the sensor lines (21a, 21b, 21c), wherein the indices of the three dimensional image stack data structure (S) are defined by

i) an integer recording index ($t_1$, ..., $t_9$) characterising the transport progress for which the relevant brightness value was created,
ii) a line index ($z_1$, ..., $z_4$) characterising the position of the sensor line (21a, 21b, 21c) in the transport direction (x), in which the pixel is located, which has determined the relevant brightness value, and
iii) the column position ($y_1$, ..., $y_5$) of that pixel, which has determined the relevant brightness value, with respect to the sensor lines (21a, 21b, 21c) perpendicular to the transport direction (x),
**characterised in that**

- for individual selected entries, in particular for all entries ($E_1$, $E_2$, $E_3$), the image stack data structure (S),

- starting from each selected entry ($E_2$, $E_5$), which is assigned to a sensor line (21a, 21b, 21c), after at least two entries, the brightness values of which were created by other sensor lines (21a, 21b, 21c) and are assigned to the same column position ($y_1$, ..., $y_5$), is sought, which show the same range of objects as the respective selected entry ($E_2$, $E_5$) and the line indices ($z_1$, $z_2$, $z_3$) of which are different from the line index of the selected entry, wherein in particular the difference between their line indices and the line index of the selected entry ($E_2$, $E_5$) has one of several predetermined values,
- distances ($d_{21}$, $d_{23}$) with respect to the recording index ($t_1$, $t_5$, $t_3$) in each case between the selected entry ($E_1$, $E_2$, $E_3$) and in each case one of the entries found in this way are calculated using sub-pixel arithmetic,
- a distance average value ($d_{21}^*$, $d_{23}^*$) of the distances ($d_{21}$, $d_{23}$) for individual recording indices ($t_1$, $t_5$, $t_8$) and line indices ($z_1$, ..., $z_4$) are formed separately via selected, in particular all, column positions ($y_1$, ..., $y_5$), in particular in each case for both distances ($d_{21}$, $d_{23}$),
- for a number of pairs comprising in each case one of the recording indices ($t_1$, $t_5$, $t_8$) and one of the line indices ($z_1$, ..., $z_4$) in each case an element ($E_1^*$, ...) is created, to which the respective distance average value ($d_{21}^*$, $d_{23}^*$) is assigned, and
- to a number of selected elements ($E_2^*$, $E_5^*$) in each case further elements ($E_1^*$, $E_3^*$, $E_{4.1}^*$, $E_{4.2}^*$, $E_{6.1}^*$, $E_{6.2}^*$) with line index predetermined relative to the respective selected element ($E_2^*$, $E_5^*$) are assigned, in which the difference of the unadjusted recording indices ($t_1$, ..., $t_9$) of the selected element ($E_2^*$, $E_5^*$) and the further elements ($E_1^*$, $E_3^*$, $E_{4.1}^*$, $E_{4.2}^*$, $E_{6.1}^*$, $E_{6.2}^*$) corresponds to the respective distance average value ($d_{21}^*$, $d_{23}^*$) assigned to the selected element ($E_2^*$, $E_5^*$), or comes closest to said distance average value, wherein, if necessary, the two further elements ($E_{4.1}^*$, $E_{4.2}^*$, $E_{6.1}^*$, $E_{6.2}^*$) provided with the same line index with the two differences of the adjusted recording indices that come closest to the respective distance average value ($d_{21}^*$, $d_{23}^*$) are assigned jointly to the respective selected element ($E_2^*$, $E_5^*$), and
- an index adjustment of the original recording index ($t_1$, $t_5$, $t_9$) is carried out and for each recording index ($t_1$, $t_5$, $t_9$) a sub-pixel more precisely adjusted recording index ($t'_1$, $t'_5$, $t'_9$) is determined as a replacement value for the original recording index ($t_1$, $t_5$, $t_9$) by means of an optimisation process (O) in such a manner that the following constraints are satisfied:

- the individual differences between the adjusted recording index ($t'_1$, ...) of the selected element ($E_2^*$) and the adjusted recording index ($t'_1$, ...) of the element ($E_1^*$) assigned in each case to it are equal to one another,
- wherein, in the event that the line index differences of the selected entry or element and of the entry or element assigned in each case to it differ from one another, the distance average values ($d_{21}^*$, $d_{23}^*$) are weighted with a compensation factor ($k_{21}^*$, $k_{23}^*$) inversely proportional to the line index difference of the entries or elements utilised for its determination and wherein in particular the adjusted recording index ($t'_1$, ...) of several jointly assigned elements ($E_{4.1}^*$, $E_{4.2}^*$) is determined by weighting the adjusted recording indices ($t'_1$, ...) of the jointly assigned elements ($E_{4.1}^*$, $E_{4.2}^*$),
- the adjusted recording index ($t'_1$, ...) of an element ($E_1^*$, ...) is as close as possible to the respective unadjusted recording index ($t_1$, ...) of the relevant element ($E_1^*$, ...).

**2.** Method according to claim 1, **characterised in that** the optimisation process (O) is given as an additional constraint, that adjusted recording indices ($t'_1$, $t'_2$, $t'_3$) are as equally distributed as possible in the transport direction (x), so that they have in each case the same distance if possible or a predetermined distance to their neighbouring adjusted recording indices ($t'_1$, $t'_2$, $t'_3$) in the transport direction (x).

**3.** Method according to claim 1 or 2, **characterised in that** for all sensor lines (21a, 21b, 21c) and column positions ($y_1$, ..., $y_5$) an interpolation is carried out separately under the specification that the interpolating h(t) for the elements ($E_1$, $E_2$, $E_3$) provides determined brightness values upon specification of the respective adjusted recording index ($t'_1$, $t'_2$, $t'_3$), and wherein the interpolating h(t) is evaluated at the positions defined by the original recording indices ($t_1$, $t_2$, $t_3$) and thus an equalised image stack data structure is created.

**4.** Method according to any one of the preceding claims, **characterised in that** the spacing of the line index ($z_1$, ...,

$z_4$) corresponds to the spacing of the respective sensor lines (21a, 21b, 21c) or to the spacing of the recording regions of the sensor lines (21a, 21b, 21c).

**Revendications**

1. Procédé de création d'une structure de données de piles d'images (S), dans lequel

- un objet (1) est déplacé le long d'une direction de transport (x) à travers la zone d'enregistrement d'une unité d'enregistrement d'images (2),
- des enregistrements ($v_1$, ..., $v_4$) sont créés par l'unité d'enregistrement d'images (2),
- dans lequel l'unité d'enregistrement d'images (2) dispose d'un nombre de lignes de capteur (21a, 21b, 21c) qui sont disposées perpendiculairement à la direction de transport (x) de l'objet (1) et les unes derrière les autres par rapport à la direction de transport (x), en particulier de manière orientée parallèlement les unes aux autres, qui forment en particulier des lignes d'un capteur de surface,
- dans lequel les enregistrements séparés ($v_1$, ..., $v_4$) comprennent respectivement des enregistrements de ligne qui sont respectivement créés au moyen d'une ligne de capteur (21a, 21b, 21c) à des moments d'enregistrement prédéterminés,
- dans lequel les moments d'enregistrement prédéterminés sont les mêmes pour tous les enregistrements et correspondent à la progression de transport le long de la direction de transport (x),
- une structure de données de piles d'images (S) tridimensionnelle est créée à partir des enregistrements ($v_1$, ..., $v_4$) de l'objet (1), dans lequel les entrées séparées ($E_1$, $E_2$, $E_3$) de la structure de données de piles d'images (S) pour un nombre d'indices d'enregistrement ($t_1$, ..., $t_9$) contiennent respectivement au moins une valeur de luminosité pour les pixels séparés des lignes de capteur (21a, 21b, 21c), dans lequel les indices de la structure de données de piles d'images (S) tridimensionnelle sont définis par

(i) un indice d'enregistrement entier ($t_1$, ..., $t_9$) caractérisant la progression de transport pour lequel la valeur de luminosité en question a été créée,
(ii) un indice de ligne ($z_1$, ..., $z_4$) caractérisant la position de la ligne de capteur (21a, 21b, 21c) dans la direction de transport (x) dans laquelle se trouve le pixel qui a déterminé la valeur de luminosité en question, et
(iii) la position de colonne ($y_1$, ..., $y_5$) du pixel qui a déterminé la valeur de luminosité en question par rapport aux lignes de capteur (21a, 21b, 21c) perpendiculairement à la direction de transport (x),
**caractérisé en ce que**,

- pour des entrées sélectionnées séparées, en particulier pour toutes les entrées ($E_1$, $E_2$, $E_3$), de la structure de données de piles d'images (S)
- à partir de l'entrée respectivement sélectionnée ($E_2$, $E_5$) qui est attribuée à une ligne de capteur (21a, 21b, 21c), sont recherchées au moins deux entrées dont les valeurs de luminosité ont été créées par d'autres lignes de capteur (21a, 21b, 21c) et qui sont attribuées à la même position de colonne ($y_1$, ... $y_5$), qui présentent la même zone d'objet que l'entrée sélectionnée respective ($E_2$, $E_5$), et dont les indices de ligne ($z_1$, $z_2$, $z_3$) diffèrent de l'indice de ligne de l'entrée sélectionnée, dans lequel en particulier la différence entre leurs indices de ligne et l'indice de ligne de l'entrée sélectionnée ($E_2$, $E_5$) présente une de plusieurs valeurs prédéterminées,
- les distances ($d_{21}$, $d_{23}$) concernant l'indice d'enregistrement ($t_1$, $t_5$, $t_9$) respectivement entre l'entrée sélectionnée ($E_1$, $E_2$, $E_3$) et respectivement l'une des entrées ainsi trouvées sont calculées en utilisant un calcul arithmétique de sous-pixels,
- une valeur moyenne de distance ($d_{21}^*$, $d_{23}^*$) des distances ($d_{21}$, $d_{23}$) pour des indices d'enregistrement ($t_1$, $t_5$, $t_9$) et des indices de ligne ($z_1$, ..., $z_4$) séparés est formée sur des positions de colonne sélectionnées, en particulier toutes les positions de colonne ($y_1$, ..., $y_5$), en particulier respectivement pour les deux distances ($d_{21}$, $d_{23}$) séparément,
- pour un nombre de paires comprenant respectivement un des indices d'enregistrement ($t_1$, $t_5$, $t_9$) et un des INDICES de ligne ($z_1$, ..., $z_4$), est créé respectivement un élément ($E_1^*$, ...) auquel sont attribuées les valeurs moyennes de distance ($d_{21}^*$, $d_{23}^*$) respectives, et
- à un nombre d'éléments sélectionnés ($E_2^*$, $E_5^*$) sont respectivement attribués d'autres éléments ($E_1^*$, $E_3^*$, $E_{4,1}^*$, $E_{4,2}^*$, $E_{6,1}^*$, $E_{6,2}^*$) avec un indice de ligne prédéterminé par rapport à l'élément sélectionné respectif ($E_2^*$, $E_5^*$), pour lesquels la différence entre les indices d'enregistrement non ajustés ($t_1$, ..., $t_9$) de l'élément sélectionné ($E_2^*$, $E_5^*$) et de l'autre élément ($E_1^*$, $E_3^*$, $E_{4,1}^*$, $E_{4,2}^*$, $E_{6,1}^*$, $E_{6,2}^*$) correspond à la valeur moyenne de distance ($d_{21}^*$, $d_{23}^*$) respective attribuée à l'élément sélectionné ($E_2^*$, $E_5^*$), ou s'en approche,

dans lequel, le cas échéant, les deux autres éléments ($E_{4,1}^*$, $E_{4,2}^*$, $E_{6,1}^*$, $E_{6,2}^*$) pourvus du même indice de ligne avec les deux différences des indices d'enregistrement non ajustés qui se rapprochent de la valeur moyenne de distance respective ($d_{21}^*$, $d_{23}^*$) sont attribués ensemble à l'élément sélectionné respectif ($E_2^*$, $E_5^*$), et

- un ajustement d'indice de l'indice d'enregistrement original ($t_1$, $t_5$, $t_9$) est effectué et, pour chaque indice d'enregistrement ($t_1$, $t_5$, $t_9$), un indice d'enregistrement ajusté au sous-pixel près ($t'_1$, $t'_5$, $t'_9$) est déterminé en tant que valeur de remplacement de l'indice d'enregistrement original ($t_1$, $t_5$, $t_9$) au moyen d'un procédé d'optimisation (O) de sorte que les conditions auxiliaires suivantes soient remplies :

- les différences séparées entre l'indice d'enregistrement ajusté ($t'_1$, ...) d'un élément sélectionné ($E_2^*$) et l'indice d'enregistrement ajusté ($t'_1$, ...) d'un élément ($E_1^*$) qui lui est respectivement attribué sont égales entre elles,
- dans lequel, dans le cas où les différences d'indice de ligne entre l'entrée ou l'élément sélectionné et l'entrée ou l'élément qui lui est respectivement attribué diffèrent l'une de l'autre, les valeurs moyennes de distance ($d_{21}^*$, $d_{23}^*$) sont pondérées avec un facteur de compensation ($k_{21}^*$, $k_{23}^*$) inversement proportionnel à la différence d'indice de ligne des entrées ou éléments utilisés pour sa détermination, et
dans lequel en particulier l'indice d'enregistrement ajusté ($t'_1$, ...) de plusieurs éléments attribués ensemble ($E_{4,1}^*$, $E_{4,2}^*$) est déterminé par la pondération des indices d'enregistrement ajustés ($t'_1$, ...) des éléments attribués ensemble ($E_{4,1}^*$, $E_{4,2}^*$),
- l'indice d'enregistrement ajusté ($t'_1$, ...) d'un élément ($E_1^*$, ...) est aussi proche que possible de l'indice d'enregistrement non ajusté ($t_1$, ...) respectif de l'élément en question ($E_1^*$, ...).

2. Procédé selon la revendication 1, **caractérisé en ce que**, pour le procédé d'optimisation (O) en tant que condition auxiliaire supplémentaire, est prédéterminé le fait que des indices d'enregistrement ajustés ($t'_1$, $t'_2$, $t'_3$) sont répartis aussi régulièrement que possible dans la direction de transport (x), de sorte qu'ils présentent respectivement autant que possible la même distance ou une distance prédéterminée par rapport à leurs indices d'enregistrement ajustés ($t'_1$, $t'_2$, $t'_3$) voisins dans la direction de transport (x).

3. Procédé selon la revendication 1 ou 2, **caractérisé en ce que**, pour toutes les lignes de capteur (21a, 21b, 21c) et les positions de colonnes ($y_1$, ... $y_5$) séparément, une interpolation est effectuée en partant du principe que la fin d'interpolation h(t) pour les éléments ($E_1$, $E_2$, $E_3$) fournit des valeurs de luminosité déterminées lors de la prédétermination de l'indice d'enregistrement ajusté ($t'_1$, $t'_2$, $t'_3$) respectif, et dans lequel la fin d'interpolation h(t) est évaluée aux positions définies via l'indice d'enregistrement original ($t_1$, $t_2$, $t_3$) et de cette façon une structure de données de piles d'images rectifiée est créée.

4. Procédé selon l'une quelconque des revendications précédentes, **caractérisé en ce que** l'espacement de l'indice de ligne ($z_1$, ... $z_4$) correspond à l'espacement des lignes de capteur (21a, 21b, 21c) respectives ou à l'espacement des zones d'enregistrement des lignes de capteur (21a, 21b, 21c).

Fig. 1

Fig. 2

Fig. 3a

Fig. 3b

Fig. 4

EP 3 518 180 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2902963 A1

**In der Beschreibung aufgeführte Nicht-Patentliteratur**

- **D. SCHARSTEIN ; R. SZELISKI.** A taxonomy and evaluation of dense twoframe stereo correspondence algorithms. *International Journal of Computer Vision,* April 2002, vol. 47 (1/2/3), 7-42

- **STEPHEN BOYD ; LIEVEN VANDENBERGHE.** *Convex Optimization,* 2004